# EUROPEAN PATENT APPLICATION

(11) **EP 0 745 418 A1**
(43) Date of publication of application: **04.12.1996**
(21) Application number: 96201496.5
(22) Date of filing: 31.05.1996
(51) Int. Cl.: B01D 45/14, B04B 5/12

(54) **Purification unit comprising a group of rotational particle separators.**

(30) Priority: 31.05.1995 NL 1000465
(71) Applicant: Stork Ketels B.V., NL-7553 LL Hengelo (NL)
(72) Inventor: Grooters, Albert, 7223 SD Maarlo (NL); Wiemer, Willem, 7491 GN Delden (NL)
(74) Representative: Prins, Hendrik Willem

(57) **Abstract**

The invention relates to a purification unit comprising a housing with an inlet chamber and an outlet chamber which are separated by a partition wall in which is arranged a group of particle separators which are provided with a rotor and of which an inlet connects onto the inlet chamber and an annular outlet connects onto the outlet chamber, wherein the annular outlet is preferably an outlet oriented radially relative to the rotor of the particle separator.

## Description

The present invention relates to a purification unit comprising a group of rotational particle separators.

In the purifying of fluid flows such as gas flows it may be desired in certain conditions to make use of rotational particle separators. This can for instance be a rotational particle separator as described in the European patent 0 286 160.

Such conditions occur for instance in the purifying of very voluminous gas flows in a short time (for instance up to 500 m³/second). Such conditions occur for instance during purifying of air flows being supplied to a gas turbine of a power station. As a consequence of the very large volume to be treated, a large number of rotational particle separators is required, which entails problems in terms of the orientation of such rotational particle separators in a group, while the separators have to be placed as closely as possible to each other and the simplest possible construction must be applied herein since otherwise the purification unit becomes too large and too costly.

The present invention has for its object to provide a purification unit in which such large numbers of rotational particle separators are applied while the purification unit can nevertheless be assembled relatively compactly using a comparatively simple construction, wherein accessibility, replaceability, maintenance and repair of each rotational particle separator is nevertheless ensured as well as possible.

This is achieved according to the invention in that the purification unit comprises a housing with an inlet chamber and an outlet chamber which are separated by a partition wall in which is arranged a group of particle separators which are provided with a rotor and of which an inlet connects onto the inlet chamber and an annular outlet connects onto the outlet chamber.

The present invention is based on the insight that by making use of an annular outlet instead of spiral housings with one or more tangential inlets and outlets, the mutual distance between rotational particle separators can be minimized, wherein the simplest possible construction must be ensured.

According to a first embodiment the annular outlet consists of a radially oriented outlet and, according to another embodiment, of an axially oriented outlet. The use of axial, radial or a combination of both types of outlet can depend on the grouping of the rotational particle separators, cooling, and optionally the desirability of arranging blades and/or baffles.

For an optimum energy efficiency it is further recommended that the outlet of a particle separator connects upstream onto a blade system disposed above the rotor. Through the use of a blade housing in combination with the annular outlet the peripherally directed speed of the fluid passing through a rotational particle separator is optimally converted into a radial and, optionally, also into an axial component such that an optimum pressure build-up occurs, i.e. the rotation energy is optimally converted into pressure, whereby the purification unit has an optimum energy efficiency.

If more preferably the housing with the group of particle separators comprising a rotor extends round a discharge duct connecting onto the outlet chamber, an optimum close stacking of rotational particle separators is obtained while the other advantages of the invention are retained as far as is possible.

If in further preference the housing is divided into sectors each having a group of particle separators, it is possible when this is desired to render a sector inoperative temporarily for repair, maintenance and the like, while the other sectors can be used, whereby the total purification unit does not have to be taken out of service. If in preference the outlet chamber in a sector herein connects onto the discharge duct via an outlet opening connectable to a valve, this guarantees that a sector is rendered inoperative only on the pressure side.

A very advantageous situation in which the purification unit according to the invention is applied occurs when preferably the outlet chamber respectively the discharge duct connects onto a turbine.

For arrangement in the outside air, for instance at great height or in the vicinity of water surfaces, it is further recommended that the inlet chamber is provided with a de-icing unit whereby ice crystals can be removed at an early stage.

Mentioned and other features of the purification unit according to the invention will be further elucidated hereinbelow with reference to an embodiment which is given purely for purposes of elucidating the invention without this latter being limited thereto.

In the drawing:
fig. 1 shows a perspective schematic view of a power station provided with a purification unit according to the invention;
fig. 2 shows on larger scale and partly broken away the detail II of fig. 1;
fig. 3 shows on larger scale and partly broken away the detail III of fig. 2; and
fig. 4 shows a variant of fig. 3.

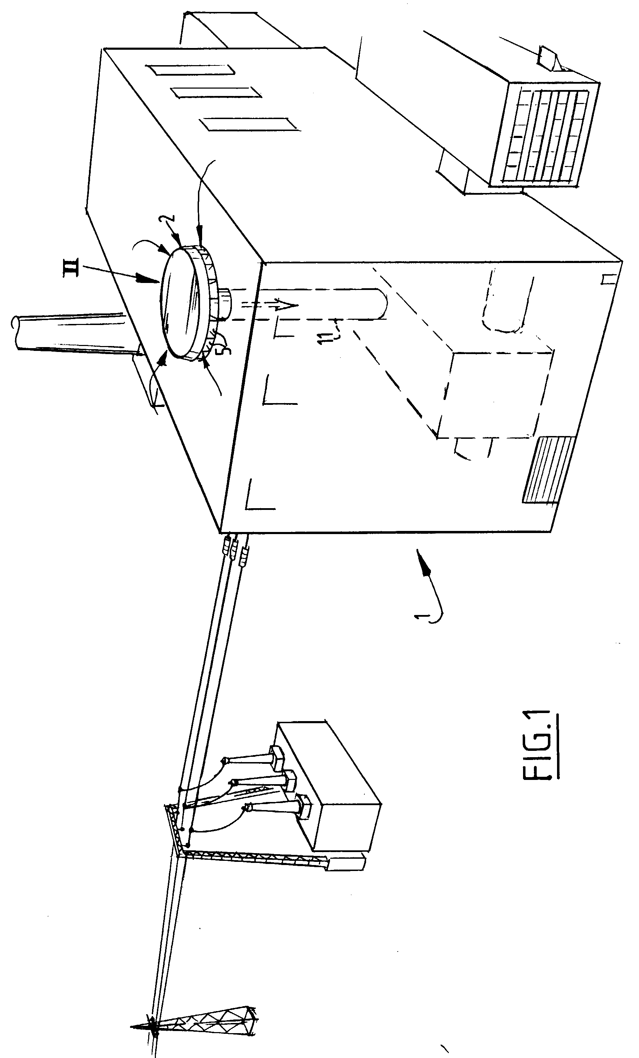

Fig. 1 shows a power station 1 having placed thereon a purification unit 2 according to the invention embodied in the form of a toadstool.

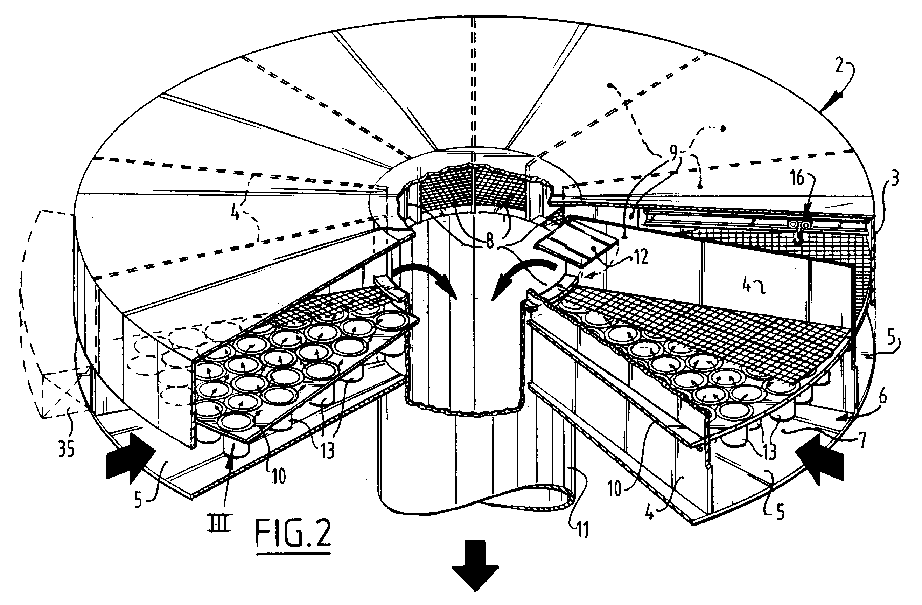

As shown in more detail in fig. 2, purification unit 2 comprises a cylindrical housing 3 which is divided by sector walls 4 into a plurality of sectors 5. Housing 3, and therewith each sector 5, comprises an inlet chamber 7 provided with an inlet opening 6 and an outlet chamber 9 provided with an outlet opening 8. Inlet chamber 7 and outlet chamber 9 are separated by a partition wall 10.

Housing 3 extends round a discharge duct 11 connecting onto each outlet chamber 9, wherein the outlet opening 8 to discharge duct 11 is closable with a valve 12.

Fig. 2 further shows that in the partition walls 10 (in each sector) are arranged a group of particle separators 13 which are provided with a rotor and which are positioned at a short mutual distance on account of the annular outlets used with which particle separators 13 debouch into outlet chamber 9. A grid floor 15 constructed from grid elements 14 extends above the group of particle separators 13, so that each sector can be walked on and each particle separator 13 is accessible for maintenance, repair and the like, wherein such operations can be performed easily due to the hoisting gear 16 present in each sector.

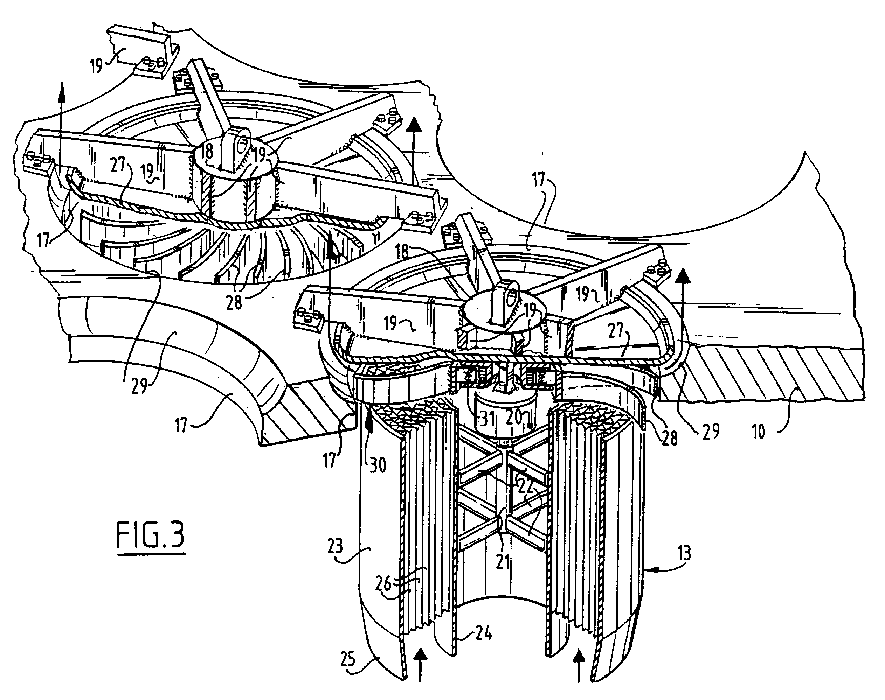

Fig. 3 shows in more detail the construction of the rotational particle separator 13 which is arranged in the partition wall 10 between inlet chamber 7 and outlet chamber 9.

Grouped at short mutual distance in partition wall 10 are openings 17 in which a rotational particle separator 13 is suspended. For this purpose the rotational particle separator comprises a mounting tube 18 which is arranged over and in opening 17 using legs 19. Fixed to mounting tube 18 is the motor 20 which is connected to the rotor 23 with wings 22 fixed to the motor shaft 21. Rotor 23 comprises an inner jacket 24 and an outer jacket 25 with axial separating channels 26 therebetween, in this case formed by a winding of corrugated board-like strip material.

Rotor 23 hangs beneath a cover 27 fixed to mounting tube 18. Arranged for rotation between rotor 23 and outlet 29 is a blade system 30 provided with blades 28, whereby fluid, for instance gas, leaving the rotating rotor is deflected radially in the direction of the annular outlet 29 formed between cover 27 and opening 17.

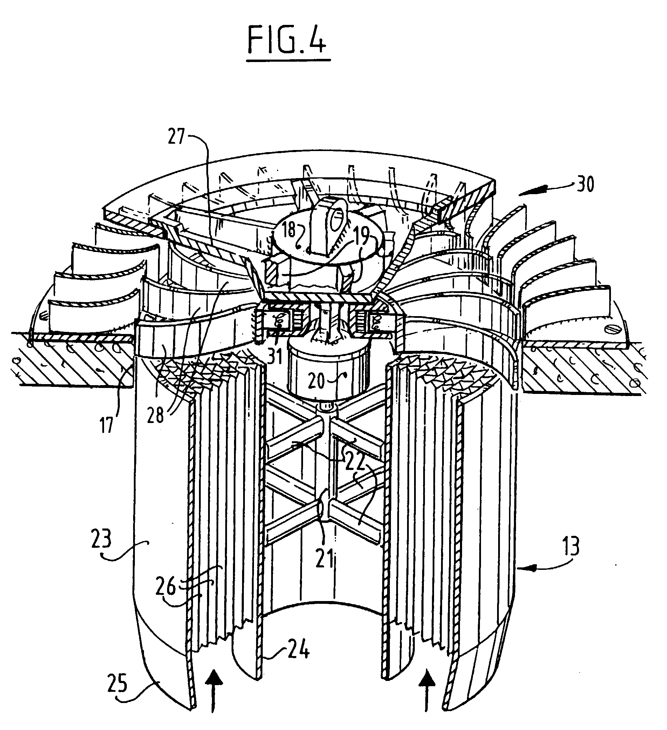

It will be apparent however that by disposing the particle separator 13 higher above the separating floor 18 use can also be made of annular, radially oriented outlets. In such a situation as shown in fig. 4, the radial outlet 32 comprises curved baffles 33 distributed over the periphery thereof, protruding in radial direction and placed on a baffle ring 34.

Finally, fig. 2 shows that a de-icing unit 35 can be connected onto an inlet opening 6 in order to remove ice crystals from the incoming air, or to prevent ice-formation.

Because with the use of the rotational particle separators 13 a pressure build-up takes place to the delivery side, in case of leakage or failure of a rotational particle separator, air can only flow from the clean part of the purification unit to the dirty part of the purification unit, whereby a practically perfect sealing of the rotational particle separators in the partition wall 10 is also not usually necessary.

## Claims

1. Purification unit comprising a housing with an inlet chamber and an outlet chamber which are separated by a partition wall in which is arranged a group of particle separators which are provided with a rotor and of which an inlet connects onto the inlet chamber and an annular outlet connects onto the outlet chamber.

2. Purification unit as claimed in claim 1, wherein the annular outlet is an outlet oriented radially relative to the rotor of the particle separator.

3. Purification unit as claimed in claim 1, wherein the annular outlet is an outlet oriented axially relative to the rotor of the particle separator.

4. Purification unit as claimed in claim 2 or 3, wherein between the outlet and the rotor of a particle separator a blade system is disposed rotatably above the rotor.

5. Purification unit as claimed in claims 1-4, wherein the outlet comprises baffles distributed over the periphery and disposed protruding from the annular outlet in radial direction.

6. Purification unit as claimed in claims 1-5, wherein the housing with the group of particle separators comprising a rotor extends round a discharge duct connecting onto the outlet chamber.

7. Purification unit as claimed in claims 1-6, wherein the housing is divided into sectors each having a group of particle separators.

8. Purification unit as claimed in claim 7, wherein the outlet chamber in a sector connects onto the discharge duct via an outlet opening connectable to a valve.

9. Purification unit as claimed in claims 1-8, which connects onto a turbine with the outlet chamber respectively the discharge duct.

10. Purification unit as claimed in claims 1-9, wherein the inlet chamber is provided with a de-icing unit.
